Europäisches Patentamt

**European Patent Office**

Office européen des brevets

(11) Publication number: **0 006 570**

**B1**

(12) # EUROPEAN PATENT SPECIFICATION

(45) Date of publication of patent specification: **09.06.82**

(51) Int. Cl.³: **H 04 N 1/10, H 04 N 1/024**

(21) Application number: **79102023.3**

(22) Date of filing: **19.06.79**

(54) Document scanning system with exposure control.

(30) Priority: **30.06.78 US 920942**

(43) Date of publication of application:
**09.01.80 Bulletin 80/1**

(45) Publication of the grant of the patent:
**09.06.82 Bulletin 82/23**

(84) Designated Contracting States:
**DE FR GB**

(56) References cited:
**US - A - 3 438 704**
**US - A - 3 544 713**
**US - A - 3 743 405**
**US - A - 3 800 079**
**US - A - 3 952 144**

(73) Proprietor: **International Business Machines Corporation**
**Armonk, N.Y. 10504 (US)**

(72) Inventor: **White, James Merrill**
**37 Colton Road, R.D. No. 4**
**Mahopac, New York 10541 (US)**

(74) Representative: **Lewis, Alan John**
**IBM United Kingdom Patent Operations Hursley Park**
**Winchester, Hants, SO21 2JN (GB)**

Courier Press, Leamington Spa, England.

Document scanning system with exposure control

The present invention relates to a document scanning system including devices for controlling the amount of radiation to which the scanning system is exposed. For example the scanning system may use a source of varying intensity such as an alternating current (AC) fluorescent lamp. Fluorescent lamps provide a very efficient and relatively inexpensive source of light with a controllable spectral distribution that is desirable for facsimile scanning systems and other document readers. The high sensitivity and photo current integration capabilities of charge transfer devices, for example, charge couple devices (CCD's) makes possible the use of fluorescent lamps, which have low power requirements as well as other desirable features. However, the ripple in output of AC fluorescent lamps and the aging characteristics of most lamps require some means of automatically measuring the exposure, that is the integrated light output, and controlling the CCD integration time to compensate for such variations.

There are a number of scanning systems known in the art, which utilise fluorescent tubes as an illumination source plus a CCD image scanner. One such scanning device is set forth in U.S. Patent 3,952,144 to Kolker which discloses a method and apparatus for automatic background and contrast control in a facsimile scanning system. The facsimile transmitter makes a preliminary calibrating scan in which it sequentially scans a known reference indicia, for example, a black area and a white area, and the automatic background and contrast control unit fully automatically stores a first sample of the uncorrected video signal when the known black area is being scanned and stores a second sample of the uncorrected video signal when the known white area is being scanned. During subsequent scanning and transmission of the document, the automatic background and contrast control unit continually produces voltages representing the previously stored black and white samples and uses these voltage to continuously correct the video signals received during the subsequent scanning of the document. The Kolker patent teaches the use of a reference indicia, such as a black and white calibration strip, for exposure control units in which an electronic representation of the black and white samples is stored prior to the scanning of the document itself, with the stored reference values subsequently being used to correct for background variations during the subsequent scan on the document.

U.S. Patent 3,800,079 to McNeil et al. discloses a compensation network for a scanning system, wherein a sensitivity profile of photo diodes forming a self scanned photo diode array operating in the charged storage mode is obtained as the array scans a standard background or white level while in a non-operational or write mode. The serial output of the photo diode array is integrated and a predetermined grey level is subtracted to limit the resultant signal to the range affected by photo diode sensitivity variations and illumination nonuniformities. The resultant signal is digitised and stored under control of a write control signal. Compensation subsequently takes place in an operational mode. The stored digital signals are converted to an analog signal and the grey level is added thereto to correct the serial video information during an operating mode. The McNeil et al. patent discloses a system somewhat similar to the Kolker patent, in which a background level is initially scanned and then stored and is subsequently used as a reference level as the document itself is scanned.

U.S. specification No. 3,544,713 (Case) discloses a solid state electro-optic contact scanner in which the optical scanning system comprises illuminating means for illuminating an area of a page or other document bearing visible information and a background reference area. Case's reference area consists of a white area on the same type of paper as the page located at another location away from the page. The Case system includes a scanner device for scanning the document information area and the reference area. This device comprises an information-signal-section responsive to light from the information area of the document and a reference-signal-section responsive to light from the reference area. The system further includes means, responsive to the signals from the reference-signal-section and the information-signal-section, for producing an output signal representative of the information in the information area, which signal includes correction or compensation for varying optical parameters or characteristics of the system or between different documents scanned thereby. In the Case system the compensating means comprise a differential amplifier for comparing the signals derived from the information-signal-section and the reference-signal-section to provide an output signal having an enhanced black-to-white signal ratio. The Case system is stated to compensate for such parameters as variations in the reflectance of different types of papers and fluctuations in the intensity of the illumination.

The illuminating means disclosed in the Case specification comprise a multiplicity of separate and distinct light sources. Each light source comprises an electroluminescent layer disposed between transarent conductors overlying a photo-conductive layer. The photoconductive layer, in turn, overlies a transparent layer which contacts the area to be illuminated. In operation light from each of the electroluminescent sources is transmitted through the photoconductor to the area to be illuminated and is reflected back through the photoconductor varying the conductivity thereof. The photoconductor is connected as a controlling resistor in a series circuit and produces a voltage in the circuit indicative of the resistance of the photoconductor. This voltage is used as a compensating voltage for the information signals.

The Case system has the substantial disadvantage of being a contact system and as such requires a multiplicity of light sources. With such a multiplicity of sources, and even though they are nominally of the same construction, it has been found that the individual light intensities can vary between sources and that the intensity of any particular source may vary with time differently from that of another source. Since the Case system depends on the intensity of the source illuminating the reference area being constant and/or varying in a similar manner to that of the other light sources, the flexibility and adaptability of Case system has substantial limitations. Further, the compensating voltage varies as the intensity of the light source producing it varies and both minor and transient variations of the light intensity vary the compensating voltage.

It is therefore an object of the present invention to provide an optical scanning system in which the disadvantages associated with a multiplicity of light sources are overcome while maintaining the advantage of an enhanced information signal.

It is a further object of the present invention to provide an improved optical scanning system capable of operating satisfactorily with illuminating means, such as a fluorescent lamp, which provide a varying intensity light output.

It is another object of the invention to provide an improved optical scanning system in which compensation for varying parameters or other optical characteristics of the system or documents scanned thereby is dependant of the quantity of light (i.e. the time integral of the light intensity) rather than on the instantaneous intensity.

Accordingly the invention provides an optical scanning system comprising illuminating means for illuminating an area of a page or other document bearing visible information and a background reference area; a scanner device for scanning the information area and the reference area and including an information-signal-section responsive to light from the information area and a reference-signal-section responsive to light from the reference area; and means, responsive to the signals from the reference-signal-section and the information-signal-section, for producing an output signal representative of the information in the information area, which signal includes correction or compensation for varying optical parameters or characteristics of the system or between different documents scanned thereby, said system being characterised by the combination of illuminating means comprising a single light emitting device for illuminating simultaneously and with similar light intensity both the information area of the document and the background reference area with compensating means comprising measuring means included in the reference-signal-section for measuring the amount of light received by the reference-signal-section and for producing a control signal ($V_{TRIG}$) when said amount reaches a predetermined level and interrupt means included in the information-signal-section responsive to the control signal ($V_{TRIG}$) to interrupt the response of the information-signal-section to receipt of light.

The invention will now be more particularly described by reference to a preferred embodiment thereof which is illustrated in the accompanying drawings.

In the drawings:

Figure 1 is a schematic diagram of a document scanning system embodying the invention;

Figure 2 is a plan view of a scanner device including an exposure control section used in the document scanner system set forth in Figure 1;

Figures 3, 4, 5 and 6 are schematic diagrams of a multigate charge transfer device which functions as the exposure control section of the scanner device illustrated in Figures 1 and 2 illustrating potentials in the device at different times;

Figure 7 is a schematic diagram of the control section of the scanner system, including selected gate electrodes of the charge transfer device illustrated in Figures 2 and 3; and

Figure 8 illustrates timing diagrams which are useful in understanding the operation of the devices illustrated in Figures 3, 4, 5, 6 and 7.

The document scanning system now to be described includes a document support plate 2 formed with a transparent section 4 upon which a document 6 to be scanned may be situated. A reference element, such as a white stripe 8, is situated on the edge of the transparent section 4. Alternatively, the white stripe 8 may be replaced by the edge of the document 6 acting as a reference element. A source of illumination, such as a fluorescent light 10, illuminates the document 6 and the reference element 8 by being moved back and forth in the direction of the arrow 11 by a bidirectional drive mechanism, for example a motor or the like (not shown). A scanner array 12 comprises a photo element array formed from charged coupled devices or other bucket brigade devices, and includes a first exposure control section 14 and a second document information section 16. The image of the reference element 8 passes along a first optical path 18 onto the exposure control section 14 via a lens 22, and the image of the document 6 passing along a second optical path 20 via the lens 22 onto the document information section 16. A clock generator 24 provides a plurality of control signals via the lines 26 through 28 to the scanner array 12 for controlling the operation thereof. The scanner array 12 and the clock generator 24 may be formed on a single chip 25, or may be discrete devices. When the exposure control section 14 has sensed a predetermined amount of illumination, a control signal is provided via the line 30 to the clock generator 34 as an indication that the exposure time for the exposure control section 14 as well as the document information section 16 is completed, and a selected one of the control signals on the lines 26 through 28 is terminated so that the integration cycle (to be described below) for one line on the document is completed. This mode of operation continues as the document 6 is scanned one line at a time. An output signal is provided on a line 32 to a utilisation device 34 and represents the character information appearing on the line of the document 6 being scanned, with the utilisation device 34 responding to the input on the line 32 for reproducing each line of the document which is imaged from the document 6 onto the scanner array 12.

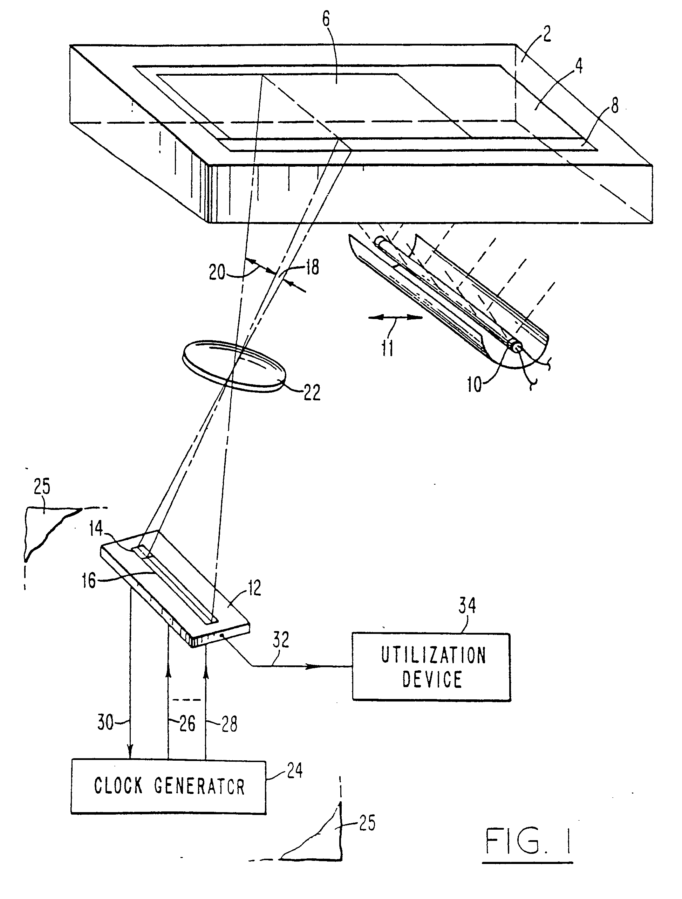

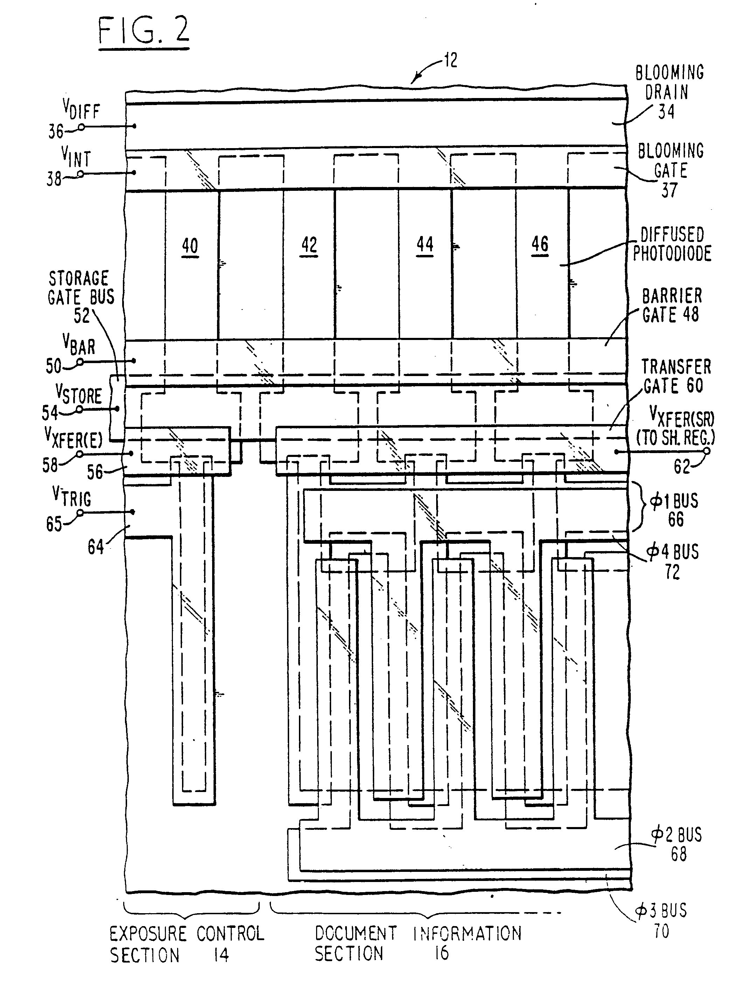

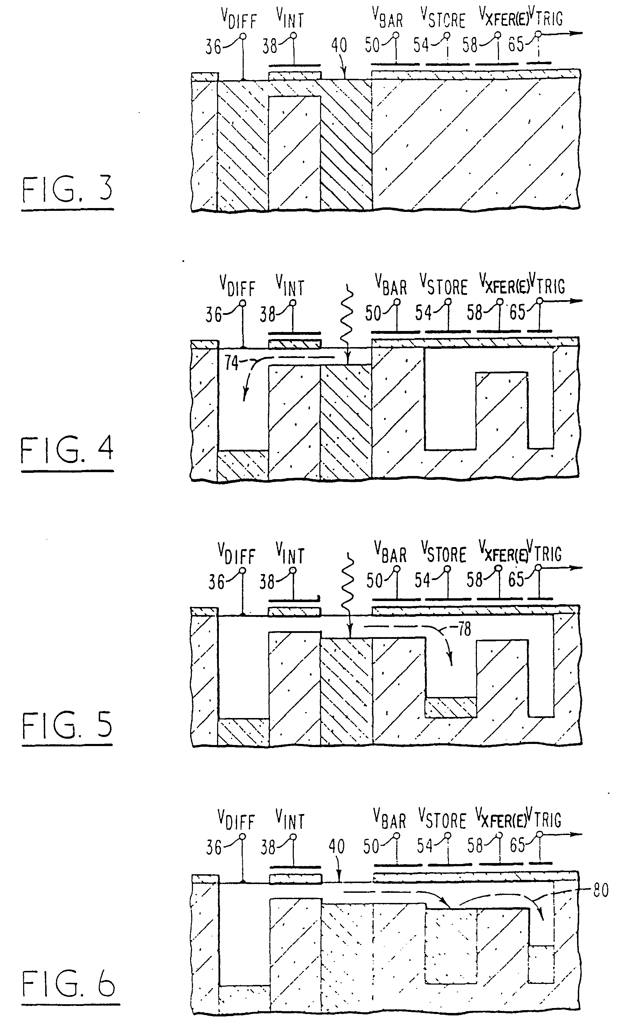

Figure 2 is a plan view of the scanner array 12, which is illustrated generally in Figure 1. As stated with reference to Figure 1, the scanner array 12 includes an exposure control section 14 and a document information section 16. The fabrication of this scanner array comprising charge transfer devices such as charge coupled devices (CCD's) will not be described as it is well known to those skilled in the art and can be readily ascertained from the Figure. For example, fabrication techniques for constructing a four phase CCD device and set forth in "Charge Transfer Devices" by Carlo H. Sequin & Michael F. Thompsett, Academic Press, Inc. 1975 at Figure 3.2 and pages 23—25 in particular. The scanner array 12 has a blooming drain 34 which receives an input potential Vdiff at a terminal 36, and a blooming gate 37 which receives an input potential Vint at a terminal 38. A diffused photo sensitive element 40 is formed in the exposure control section 14 for sensing the radiant energy received from the reference element 8. Diffused photo sensitive elements 42, 44 and 46 on the document information section 16 receive radiant energy from the document 6. A barrier gate 48 receives an input potential Vbar at a terminal 50. A storage gate bus 52 receives an input potential Vstore at an input terminal 54. A transfer gate 56 in the exposure control section 14 receives an input potential Vxfer(e) at a terminal 58, and a transfer gate 60 in the document information section 16 receives an input potential Vxfer(sr) at a terminal 62. A trigger bus 64 in the exposure control section 14 is connected to an output terminal 65 which provides an output potential Vtrig indicative of the desired amount of illumination having been sensed by the exposure control section 14. Buses 66, 68, 70 and 72 are $\phi 1$, $\phi 2$, $\phi 3$ and $\phi 4$ buses respect-

ively for controlling the timing sequence of the shift registers for the document information section 16. The operation of the exposure control section 14 is to be described referring to Figures 3—8. The document information section 16 operates in a somewhat similar manner. It can be seen that the blooming drain 34, blooming gate 37, barrier gate 48 and storage gate bus 52 are common to the exposure control section 14 and the document information section 16, whereas the transfer gates 56 and 60 are exclusive to the exposure control section 14 and section 16 respectively. This will be explained in more detail, with respect to Figures 3, 4, 5, 6, 7 and 8.

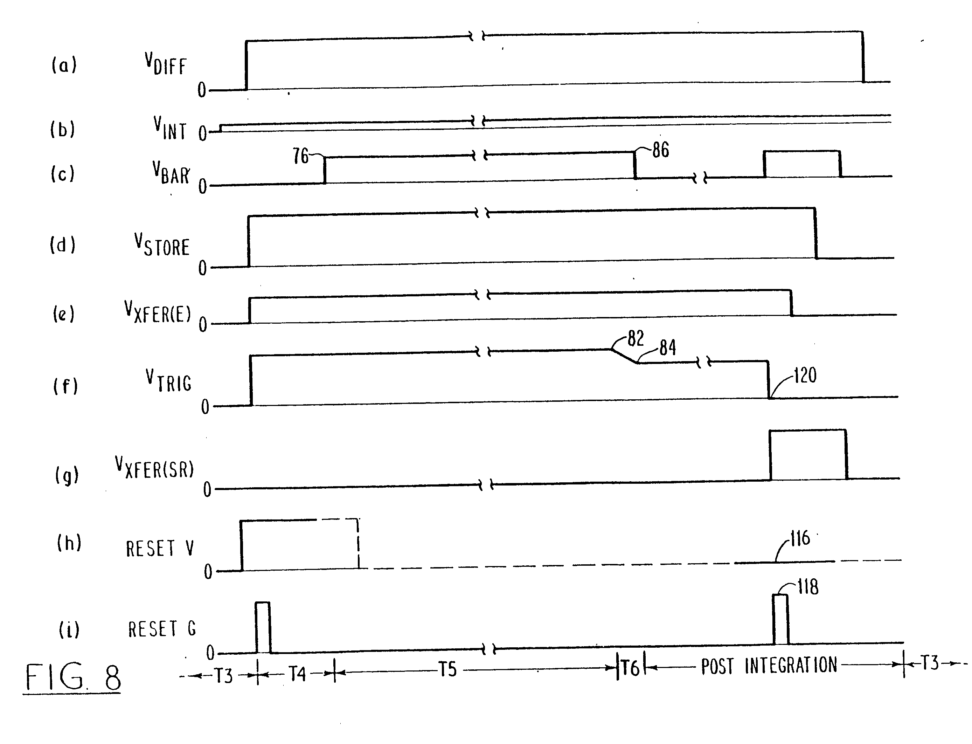

Figures 3 to 8 illustrate the operation of the exposure control section 14. With reference to Figure 8, the designations T3, T4, T5, T6 at the bottom of Figure 8 indicate the time periods corresponding to the occurrence of the different sets of surface potentials illustrated in Figures 3—6 respectively. Initially, during time period T3, all of the potentials applied to the respective terminals of the exposure control section 14 are zero, except for Vint which is applied to terminal 38, and which is slightly positive. This is seen with reference to Figure 3 and Figure 8(b). As shown in Figure 4, as Vdiff goes positive at the beginning of time period T4 a potential well forms under the terminal 36, and as photo sensitive element 40 senses light radiation from the reference element 8, charge carriers are generated. When the potential well under element 40 fills, the charge carriers spill over into the potential well under terminal 36 as illustrated by the arrow 74. At this time, Vbar which is applied to terminal 50 is at zero, maintaining the charge transfer path thereunder closed, and the potentials applied to terminals 54, 58 and 65 are positive. with potential wells being formed under terminals 54 and 65 and a charge transfer path being formed under terminal 58. This may be seen with reference to Figures 5(c), 5(d), 5(e) and 5(f) respectively during the time interval T4.

When Vbar goes positive at the beginning of time period T5, as illustrated at 76 in Figure 5(c), excess charge carriers from the photo sensitive element 40 flow through the charge transfer path provided under the terminal 50 and flow into the potential well under terminal 54 as indicated by the arrow 78. As this potential well fills, as illustrated in Figure 6, charge carriers begin to spill from the potential well under terminal 54 through the charge transfer path under terminal 58 into the potential well formed under the terminal 65 as indicated by the arrow 80. This corresponds to the beginning of time period T6, as illustrated at 82 in Figure 8(f). The accumulation of charge carriers in the potential well under the terminal 65 during time period T6 causes the potential at terminal 65 to become increasingly more negative, until a predetermined level is reached which indicates that a predetermined amount of light radiation has been sensed by the exposure control section 14. When this occurs a control signal is provided to the clock generator 24 via line 30 (Figure 1) to indicate that the required exposure of the document 6 has occurred. The clock generator 24 then terminates the Vbar pulse, returning it to a zero level as indicated at point 86 in Figure 8(c) and terminates time period T6. At this stage the period of integration of the signal representing the receipt of light radiation comes. With the cessation of this process of integration, Vtrig is maintained at the level indicated at 84 in Figure 8(f). A post-integration time period then occurs, during which the charge which has been accumulated in the document information receiving section 16 may then be processed through the associated shift registers to the utilisation device 34 (Figure 1). The light radiation sensing process, using exposure control section 14 for determining exposure level, is then repeated for each following line on the document as it is scanned.

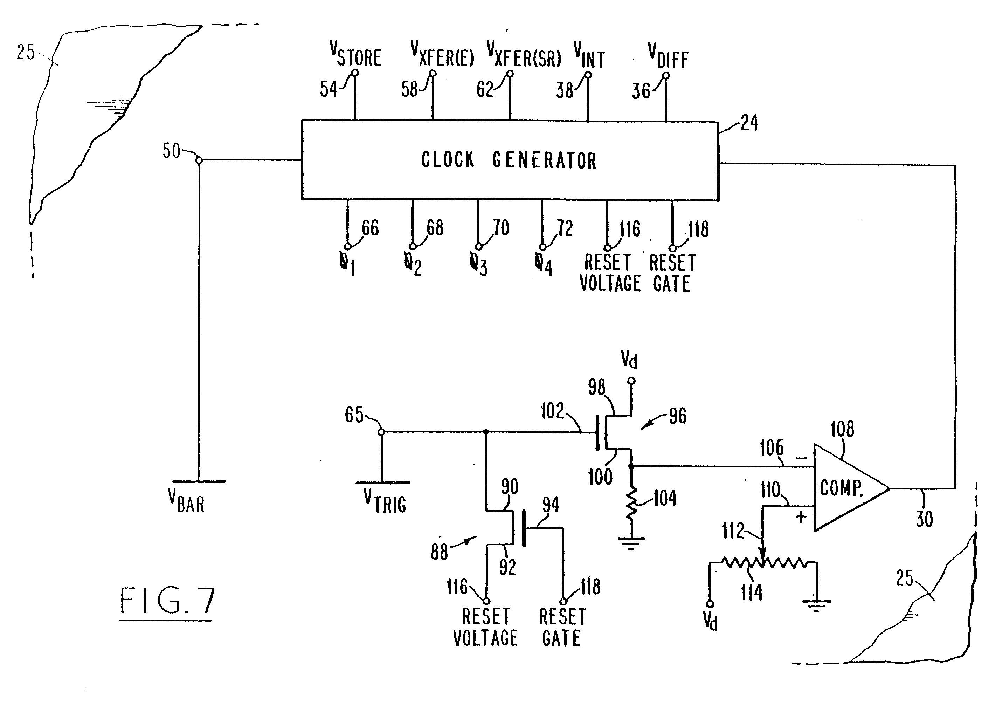

Figure 7 illustrates in more detail how the surface potential at terminal 65, Vtrig, is sensed for concurrently determining the period if integration of the exposure control section 14 and the document information section 16. There is a first field effect transistor 88 which includes a source electrode 90 connected to terminal 65, a drain electrode 92 and a gate electrode 94. A second field effect transistor 96 includes a source electrode 98 connected to a source of potential Vd, a drain electrode 100, and a gate electrode 102 which is connected to the terminal 65 and the source electrode 90 of transistor 88. The drain electrode 100 of transistor 96 is connected to ground via a resistor 104 and to a negative input terminal 106 of a comparator 108. The positive input terminal 110 of the comparator 108 is connected to the moveable arm 112 of a potentiometer 114 which has one end thereof connected to ground and the other end thereof connected to a source of potential Vd. The output 30 of the comparator 108 is connected to the clock generator 24 for providing an indication to the clock generator 24 that a light radiation integration cycle should cease and Vbar should return to zero.

As illustrated in Figure 8(h) and 8(i), at the beginning of the time period T4, reset voltage at terminal 116 and reset gate voltage at terminal 118 are concurrently high for a short time interval. Accordingly, transistor 88 becomes conductive and the potential at terminal 116 is felt at terminal 65 and at the gate electrode 102 of the transistor 96. This positive potential renders the transistor 96 conductive and the source electrode 100 positive, and forms a potential well under the terminal 65, as previously described. With reference to Figure 8(f), as charge carriers begin to spill into the potential well under the terminal 65 at the beginning of time period T6 as described previously with reference to Figure 6, the potential at terminal 65 then begins to become more negative as shown at point 82, with this negative potential being felt at the gate electrode 102 of the transistor 96, rendering the transistor less conductive. Accordingly, the potential felt at the negative input terminal 106 of the comparator 108 begins to become more negative, and is compared with the positive input applied to the terminal 110 thereof. When the potential at terminal 106 substantially equals that at the terminal 110, the comparator 108 provides a pulse on the output line 30 to the clock generator 24 indicating that sufficient background level of radiation has been sensed and the integration period should stop. In response thereto, clock generator 24 returns the Vbar potential at terminal 50 to zero volts, as indicated at the point 86 in Figure 8(c), thereby closing the charge transfer path thereunder and ceasing the integration period until the next cycle. In the post-integration time period, a reset gate pulse (Figure 8(i)) is applied to the gate electrode 94 of transistor 88 via terminal 118 (Figure 7). This results in the application of the potential on terminal 118 which is zero at this time (Figure 8(h)) to the Vtrig electrode 65 to return Vtrig to a zero potential, as indicated at 120 (Figure 8(f)). This returns the scanner array to its initial condition prior to sensing the next line of the document. As previously stated, the clock generator 24 provides the respective potentials for the exposure control section 14 and the document information section 16, including the 1—4 timing pulses for the shift register of section 16.

Returning briefly to Figure 2, it may be seen that the operation of the document information section 16 is similar to that of the exposure control section 14, with the exception being that the transfer gate voltage Vxfer(sr) (Figure 8(g)) applied to terminal 62 occurs at a different time to the transfer gate voltage Vxfer(e) (Figure 8(e)) applied to terminal 58 for the exposure control section 14. Also, it is seen that in section 16, rather than there being a Vtrig electrode, there is the first $\phi1$ bus 66, which has charge accumulated thereunder indicative of the image in the document line, during the light radiation integration time determined by Vbar, with $\phi1$ then beginning the transfer of charge through the respective stages of the shift register for processing, and then application to the utilisation device 34 (Figure 1).

It is seen that the scanning system illustrated includes several notable operational features. There is an ability to control the light radiation integration time after integration has started, since the barrier gate 48 acts like a shutter in a camera under electronic control. Exposure is monitored from the beginning of the integration period, and when sufficient accumulated light radiation has entered the exposure control section 14, as sensed by the comparator 108 (Figure 7), the shutter closes, i.e., the barrier gate voltage Vbar is switched to a zero level to block the flow of charge between the photo sensitive element 40 and the storage well. The integrated charge in the storage region of each photo sensitive element in the document information section 16 can then be held until the associated shift register is ready to accept a new line of data. The exposure control section 14 is responsive to changes in the light source, to the reflectivity of the paper, to the insertion of various filters in the optical path, to changes in lens aperture, etc. which also effect the radiation reaching section 16. Another important consideration is that the exposure control section 14, fabricated at the same time as the section 16, provides match spectral responses for colour applications and other radiation.

## Claims

1. An optical scanning system comprising illuminating means for illuminating an area (6) of a page or other document bearing visible information and a background reference area (8); a scanner device (22, 12) for scanning the information area and the reference area and including an information-signal-section (16) responsive to light from the information area (6) and a reference-signal-section (14) responsive to light from the reference area (18); and means, responsive to the signals from the reference-signal-section and the information-signal-section, for producing an output signal representative of the information in the information area, which signal includes correction or compensation for varying optical parameters or characteristics of the system or between different documents scanned thereby, said system being characterized by the combination of illuminating means comprising a single light emitting device (11) for illuminating simultaneously and with similar light intensity both the information area (6) of the document and the background reference area (8) with compensating means (36, 38, 50, 54, 58, 65) comprising measuring means included in the reference-signal-section (14) for measuring the amount of light received by the reference-signal-section and for producing a control signal ($V_{TRIG}$) when said amount reaches a predetermined level and interrupt means (90, 96, 108, 24) included in the information-signal-section (16) responsive to the control signal ($V_{TRIG}$) to interrupt the response of the information-signal-section to receipt of light.

2. A system as claimed in claim 1, further characterised in that the measuring means comprise a semiconductor substrate having integrated therein a photo-electric device (40), and a charge transfer device (Figures 3 to 6; 36, 38, 50, 54, 58, 65) electrically associated with the photo-electric device so as to produce, in use, a voltage in dependance on the electrical output of the photo-electric device.

3. A system as claimed in claim 2, further characterised in that the document information section (16) comprise an array of photo-electric devices integrated in the same semiconductor substrate together with an array of charge transfer devices respectively electrically associated with the array of photo-electric devices so as to produce, in use, voltages in dependance on the electrical outputs of the respectively associated photo-electric devices.

4. A system as claimed in claim 2 or 3, further characterised in that the interrupt means comprise a transistor having its control electrode connected to receive the voltage output of the charge transfer device and providing a controlled output to one input of a comparator, the other input of which receives a reference signal and the output of which changes when the two inputs bear a predetermined relationship.

5. A system as claimed in claim 3 or 4, in which each charge transfer device of the array comprises a transfer control electrode (50) for controlling transfer of charge from the photo-electric device to a first potential well site beneath a storage electrode ($V_{STORE}$), said system being further characterised in that the interrupt means comprise a signal generator (24) responsive to a signal (30) derived from said control signal ($V_{TRIG}$), to apply a potential ($V_{BAR}$) to the transfer control electrodes effective to block further charge transfer from the array of photo-electric devices to the array of charge coupled devices.

6. A system as claimed in claim 5, further characterised in that said signal generator is operative, following production of the blocking potential ($V_{BAR}$), to apply suitably phased readout signals to the array of charge transfer device to produce therefrom a serial string of data constituting the aforesaid output signal representative of the information.

## Patentansprüche

1. Optisches Abtastsystem mit einer Beleuchtungseinrichtung zur Beleuchtung eines Bereiches (6) einer Seite oder eines anderen Dokumentes mit sichtbaren Informationen und einem Referenzhintergrund (8), mit einem Abtaster (22, 12) zum Abtasten des Informationsbereiches und des Referenzbereiches mit einem Informationssignalteil (16), der auf Licht vom Informationsbereich (6), und mit einem Referenzsignalteil (14), der auf Licht vom Referenzbereich (18) anspricht sowie Einrichtungen, die auf Signale vom Informationssignalteil und vom Referenzsignalteil ansprechen und ein Ausgangssignal erzeugen, das der Information im Informationsbereich entspricht und bereits die Korrektur oder Kompensation für sich verändernde optische Parameter oder Eigenschaften des Systems oder verschiedene abgetastete Dokumente enthält, dieses System ist gekennzeichnet durch die Kombination einer Beleuchtungseinrichtung, die aus einer einzelnen Lichtquelle (11) zur gleichzeitigen Beleuchtung mit ähnlicher Helligkeit sowohl des Informationsbereiches (6) als auch des Referenzhintergrundes (8) besteht, mit einer Kompensationseinrichtung (36, 38, 50, 54, 58, 65), die eine Meßeinrichtung zum Messen der vom Referenzsignalteil (14) empfangenen Lichtmenge und zum Erzeugen eines Steuersignales ($V_{TRIG}$) bei Erreichen einer vorgegebenen Lichtmenge enthält und mit einer Unterbrechungseinrichtung (90, 96, 108, 24) im Informationssignalteil (16), die abhängig vom Steuersignal ($V_{TRIG}$) die Reaktion des Informationssignalteiles auf den Lichtempfang unterbricht.

2. System nach Anspruch 1, dadurch gekennzeichnet, daß die Meßeinrichtung aus einem Halbleitersubstrat mit integriertem photoelektrischem Element (40) und einem elektrisch integrierten Ladungsübertragungselement (Fig. 3—6; 36, 38, 50, 54, 58, 65) besteht, um im Gebrauch eine vom elektrischen Ausgangssignal des photoelektrischen Elementes abhängige Spannung zu erzeugen.

3. System nach Anspruch 2, dadurch gekennzeichnet, daß der Informationssignalteil (16) in demselben Halbleitersubstrat eine Gruppe von photoelektrischen Elementen und eine Gruppe von elektrisch zugeordneten Ladungsübertragungselementen enthält, um im Gebrauch von den elektrischen Ausgangssignalen der photoelektrischen Elemente abhängige Spannungen zu erzeugen.

4. System nach Anspruch 2 oder 3, dadurch gekennzeichnet, daß die Unterbrechungseinrichtung einen Transistor enthält, dessen Steuerelektrode die Ausgangsspannung des Ladungsübertragungselementes empfängt und der ein gesteuertes Ausgangssignal an einen Eingang eines Vergleichers liefert, dessen anderer Eingang ein Referenzsignal empfängt und dessen Ausgangssignal seine Polarität ändert, wenn die beiden Eingänge eine vorbestimmte Beziehung aufweisen.

5. System nach Anspruch 3 oder 4, dadurch gekennzeichnet, daß jedes Ladungsübertragungselement der Gruppe eine Übertragungssteuerelektrode (50) zur Steuerung der Ladungsübertragung vom photoelektrischen Element in eine erste Potentialmulde unter einer Speicherelektrode ($V_{STORE}$) enthält, un daß die Unterbrechungseinrichtung einen Signalgenerator (24) enthält, der auf ein von genanntem Steuersignal ($V_{TRIG}$) abgeleitetes Signal (30) anspricht und durch ein an die Übertragungssteuerelektroden angelegtes Potential ($V_{BAR}$) die weitere Ladungsübertragung von der Gruppe der photoelektrischen Elemente an die Gruppe der Ladungsübertragungselemente sperrt.

6. System nach Anspruch 5, dadurch gekennzeichnet, daß der Signalgenerator nach der Erzeugung der Sperrpotentials ($V_{BAR}$) Lesesignale mit geeigneter Phase an die Gruppe der Ladungsübertragungselemente gibt, um von dort die serielle Datenreihe zu bekommen, die das die Information darstellende Ausgangssignal bildet.

## Revendications

1. Système de balayage optique comprenant des moyens pour éclairer une zone (6) d'une page ou autre document comportant des informations visibles et une zone de référence dépourvue d'informations visibles (8); un dispositif de balayage (22, 12) permettant de balayer la zone des informations et la zone de référence et comprenant une partie (16) dite de signaux d'information, qui répond à la lumière reçue de la zone des informations (6), et une partie (14) dite de signaux de référence, qui répond à la lumière reçue de la zone de référence (18); et des moyens permettant, en réponse aux signaux reçus de la partie dite de signaux de référence et de la partie dite de signaux d'information, d'engendrer un signal de sortie représentant les informations existant dans la zone des informations, lequel signal permet notamment de corriger ou de compenser les variations des paramètres ou caractéristiques optiques du système ou existant entre différents documents balayés par celui-ci, ledit système étant caractérisé en ce qu'il comprend des moyens d'éclairage comportant un unique dispositif (11) émetteur de lumière afin d'éclairer simultanément et avec une même intensité lumineuse la zone des informations (6) du document et la zone de référence (8), et des moyens de compensation (36, 38, 50, 54, 58, 65) comprenant des moyens de mesure permettant, dans la partie (14) dite de signaux de référence, de mesurer la quantité de lumière reçue par la partie dite de signaux de référence et d'engendrer un signal de commande ($V_{TRIG}$) lorsque ladite quantité de lumière atteint un niveau prédéterminé et des moyens d'interruption (90, 96, 108, 24) situés dans la partie (16) dite de signaux d'information et permettant, en réponse au signal de commande ($V_{TRIG}$), d'interrompre la réponse de la partie dite de signaux d'information à la réception de la lumière.

2. Système selon la revendication 1, caractérisé en outre en ce que lesdits moyens de mesure comprennent un substrat semiconducteur dans lequel est intégré un dispositif photoélectrique (40), et un dispositif de transfert de charge (figures 3 à 6; 36, 38, 50, 54, 58, 65) électriquement associé au dispositif photoélectrique de manière à fournir, en cours d'utilisation, une tension en fonction de la sortie électrique du dispositif photoélectrique.

3. Système selon la revendication 2, caractérisé en outre en ce que la partie (16) dite des informations afférentes au document comprend un ensemble de dispositifs photoélectriques intégrés dans un même substrat semiconducteur et un ensemble de dispositifs de transfert de charge respectivement associés électriquement à l'ensemble de dispositifs photoélectriques de manière à fournir, en cours d'utilisation, des tensions en fonction des sorties électriques des dispositifs photoélectriques qui leur sont respectivement associés.

4. Système selon la revendication 2 ou 3, caractérisé en outre en ce que les moyens d'interruption comprennent un transistor dont l'électrode de commande est connectée de manière à recevoir la tension de sortie du dispositif de transfert de charge et qui applique une sortie commandée à l'une des entrées d'un comparateur dont l'autre entrée reçoit un signal de référence et dont la sortie est modifiée lorsqu'une relation prédéterminée existe entre les deux entrées.

5. Système selon la revendication 3 ou 4, dans lequel chacun des dispositifs de transfert de charge de l'ensemble comprend une électrode (50) de commande de transfert qui permet de commander le transfert de charge du dispositif photoélectrique à un premier puits de potentiel au-dessous d'une électrode d'emmagasinage ($V_{STO}$), ledit système étant en outre caractérisé en ce que les moyens d'interruption comprennent un générateur de signaux (24) qui, en réponse à un signal (30) obtenu à partir dudit signal de commande ($V_{TRIG}$), applique un potentiel ($V_{BAR}$) aux électrodes de commande de transfert pour interdire tout transfert de charge supplémentaire depuis l'ensemble de dispositifs photoélectriques à l'ensemble de dispositifs à couplage de charge.

6. Système selon la revendication 5, caractérisé en outre en ce que ledit générateur de signaux permet, consécutivement à la génération du potentiel d'interdiction ($V_{BAR}$), d'appliquer des signaux de lecture présentant des charges appropriées à l'ensemble de dispositifs de transfert de charge de manière à produire à partir de ce dernier une série de données constituant ledit signal de sortie représentant les informations.

FIG. 1

FIG. 2

BLOOMING DRAIN 34

$V_{DIFF}$ 36

$V_{INT}$ 38

BLOOMING GATE 37

DIFFUSED PHOTODIODE

40   42   44   46

STORAGE GATE BUS 52

BARRIER GATE 48

$V_{BAR}$ 50

TRANSFER GATE 60

$V_{STORE}$ 54

$V_{XFER(E)}$ 58   56

$V_{XFER(SR)}$ (TO SH. REG.) 62

$V_{TRIG}$ 65   64

φ1 BUS 66

φ4 BUS 72

φ2 BUS 68

φ3 BUS 70

EXPOSURE CONTROL SECTION   14

DOCUMENT INFORMATION SECTION   16

0 006 570

FIG. 3

FIG. 4

FIG. 5

FIG. 6

3

FIG. 7

FIG. 8

0 006 570